# EUROPEAN PATENT APPLICATION

(11) **EP 4 279 458 A1**
(43) Date of publication of application: **22.11.2023**
(21) Application number: 23180929.4
(22) Date of filing: 23.06.2020
(51) Int. Cl.: C02F 1/20, B01D 1/14, B01D 3/34, B01D 19/00, C01C 1/10

(54) **AMMONIA STRIPPER APPARATUS**

(30) Priority: 25.06.2019 GB 201909149
(62) Divisional of application: 20742365.8
(71) Applicant: Process Limited, Coventry, West Midlands CV4 7EZ (GB)
(72) Inventor: EDEN, Robert, Coventry, CV4 7EZ (GB); MOULDEN, Mark, Coventry, CV4 7EZ (GB)
(74) Representative: Lewis Silkin LLP

(57) **Abstract**

A method for removing ammonia from ammonia-containing water is described, which comprises providing an ammonia stripper 32 comprising an ammonia-containing water inlet 56, a steam inlet 70, and a forced air inlet 82, and an ammonia-containing gas outlet 36 and a wastewater outlet 72. The steam and air contact the ammonia-containing water in counter-flow to release ammonia from the ammonia-containing water. The forced air is at least partially pre-humidified in a pre-humidifier prior to mixing with the steam, and a cooling tower may be used as the pre-humidifier, wherein air enters the ammonia stripper through an air inlet towards or at the base of the cooling tower and is heated and saturated with water within the cooling tower prior to mixing with steam.

## Description

The present invention relates to ammonia stripper apparatus and methods, in particular ammonia stripper apparatus and methods for the thermal stripping of ammonia from ammonia-containing water, such as landfill leachate, effluent from anaerobic digesters, and in petrochemical applications.

It is well known that leachate from landfill sites contains a quantity of ammonia. As part of the leachate cleaning process that is essential to render leachate safe for discharge it is necessary to remove any ammonia to requisite discharge standards.

It is similarly well known that the presence of ammonia is detrimental to the satisfactory performance of anaerobic digesters. It is desirable that ammonia should be at a minimum within an anaerobic digester.

There are two known methods of stripping ammonia from water, the first is a chemical process that involves increasing the pH of the water, and the second is purely a thermal method that uses heat only. In large installations the chemical method is almost exclusively used as the energy requirement for the thermal stripping of ammonia is prohibitive and the cost of producing the necessary heat generally makes it economically unviable.

Landfill sites and anaerobic digesters produce methane as organic material therein decomposes. This methane is usually burned in a gas engine or other means for conversion to electrical energy that is then sold. The sale of electricity produced from methane forms a substantial part of the financial viability of managing landfill sites and anaerobic digesters which can be costly to build and manage.

International patent publication WO 2012/110760 discloses a system for removing ammonia from landfill leachate which comprises an ammonia stripper for removing the ammonia from the leachate as an ammonia-containing gas, followed by decomposition of the ammonia in a thermal destructor. The thermal destructor can use heat from burning landfill gas or biogas, such as methane.

Systems for removing ammonia from ammonia-containing water, such as landfill leachate, are known in the art. These systems may comprise one or more of the following features:
a landfill gas burner for burning landfill gas to produce a hot exhaust gas stream;
an economiser for producing high pressure hot water in a hot water circuit from heat exchange with a hot gas stream carrying waste heat;
a boiler heated by high pressure hot water for producing steam;
an ammonia stripper having one or more of the following features: an ammonia-containing water inlet connected to an ammonia-containing water flow path; an ammonia-containing gas outlet; a wastewater discharge outlet connected to a wastewater discharge flow path; a steam inlet connected to a boiler by a conduit; a forced air inlet; and a randomly packed bed. In use, the flow of steam and air in one direction and ammonia-containing water in the opposite direction within the ammonia stripper releases ammonia from the ammonia-containing water.

The waste heat can be obtained from any suitable waste heat source, such as waste heat from internal combustion engines or gas turbines, waste heat from a blast furnace, or any other source of suitable grade heat.

The system may further comprise a gas burner for burning gas to produce the hot gas stream. For example, the gas burner may burn landfill gas, or another form of combustible gas. This could be syngas from pyrolysis, biogas from an anaerobic digester, or sewage gas from an anaerobic digester, for example.

The system may further comprise a first heat exchanger having an inlet and an outlet for high pressure hot water, and an inlet and an outlet connected in the ammonia-containing water flow path, wherein heat exchange between the high pressure hot water and the ammonia-containing water preheats the ammonia-containing water prior to the ammonia stripper.

The system may also comprise a further heat exchanger having an ammonia-containing water inlet and an ammonia-containing water outlet in the ammonia-containing water flow path upstream of the ammonia stripper, and a wastewater inlet and outlet in the wastewater flow path; and wherein heat exchange between the wastewater and ammonia-containing water preheats the ammonia-containing water prior to the ammonia stripper. The further heat exchanger may be upstream of the first heat exchanger in the ammonia-containing water flow path.

The system may further comprise an ammonia-containing gas flow path connected to the ammonia-containing gas outlet and a condenser disposed within the ammonia-containing gas flow path to condense at least some of the water within ammonia-containing gas passing therethrough. The condenser can have an inlet and an outlet in the ammonia-containing gas flow path and an inlet and an outlet in the ammonia-containing water flow path such that, in use, heat exchange between the ammonia-containing gas and the ammonia-containing water condenses water from the ammonia-containing gas and preheats the ammonia-containing water. The condenser may be located in the ammonia-containing water flow path between the first heat exchanger and the further heat exchanger. The condenser may be further cooled by passage of a cooling fluid through a cooling circuit.

The system may further comprise a condensate flow path through which in use, condensate from the condenser is fed into the upper end of the ammonia stripper.

A heat exchanger may be provided in the lower end of the ammonia stripper between the forced air inlet and the steam inlet so that in use forced air flows in counter flow over the wastewater so as to preheat and saturate the air with water.

The system may comprise a control means configured to control the mixture of steam and air entering the packed bed of the ammonia stripper such that the temperature of the air is maintained in the range of 75°C to 90°C. The control means may also control the flow of fluid through the heat exchangers such that the temperature of the ammonia-containing water entering the ammonia stripper is maintained in the range of 72°C to 85°C.

The ammonia-containing gas may be heated in a thermal destructor to decompose the ammonia therein. The thermal destructor may be heated by burning landfill gas. For example, the thermal destructor may include the landfill gas burner which is used for producing steam in the ammonia stripper.

The thermal destructor may comprise one or more of the following features:
a tower for retaining the heated gasses for a dwell time;
a circumferential plenum chamber extending around the tower towards the lower end thereof and having a first ammonia-containing gas inlet and at least one ammonia-containing gas outlet;
a first plurality of landfill gas burners disposed around the circumference of the tower above the at least one outlet;
a second plurality of landfill gas burners substantiality centrally located in the tower and disposed vertically below the circumferential plenum chamber;
a second ammonia-containing gas inlet located at the bottom of the thermal destructor; and
a plurality of air inlet louvers disposed in the exterior surface of the tower vertically between the second ammonia-containing gas inlet and the second plurality of landfill gas burners.

Thermal destruction is one method of removing ammonia from the ammonia-containing gas, and other methods include catalytic combustion of the ammonia within the ammonia-containing gas and scrubbing of the ammonia out of the ammonia-containing gas using an acid wash. The acid could be sulphuric acid to produce ammonium sulphate or phosphoric acid to produce ammonium phosphate or ammonium di-phosphate.

Methods for removing ammonia from ammonia-containing water are also known, and may comprise one or more of the following features:
passing a hot exhaust gas stream carrying waste heat through an economiser to produce high pressure hot water in a hot water circuit;
passing high pressure hot water through a boiler connected to a source of water to produce an output of steam;
providing an ammonia stripper having one or more of the following features: an ammonia-containing water inlet connected to an ammonia-containing water flow path; an ammonia-containing gas outlet; a wastewater outlet connected to a wastewater flow path; a steam inlet connected to a first heat exchanger by a conduit; a forced air inlet; and a randomly packed bed;
passing a flow of steam and air in one direction through the ammonia stripper and allowing ammonia-containing water to flow under the influence of gravity in the other direction over the packed bed to release ammonia from the ammonia-containing water.

The method may include burning gas, such as landfill gas, in a burner to produce the hot gas exhaust stream.

The method may include the step of passing the high pressure hot water and the ammonia-containing water through separate flow paths in a first heat exchanger so that heat exchange therebetween preheats the ammonia-containing water prior to the ammonia stripper. By utilising the waste heat from the boiler to preheat the ammonia-containing water the efficiency of the system is improved.

The method may include passing the ammonia-containing water and the wastewater through separate flow paths in a further heat exchanger upstream of the ammonia stripper, so that heat exchange between the wastewater and the ammonia-containing water preheats the ammonia-containing water prior to the ammonia stripper. The ammonia-containing water may pass through the further heat exchanger before passing through the first heat exchanger. As the wastewater still has a raised temperature, by passing this through a heat exchanger to recover heat into the incoming ammonia-containing water flow the amount of waste heat from the boiler required to raise the ammonia-containing water to the required process temperature is reduced and therefore the amount of fuel being burned to produce the hot exhaust is reduced.

The method may further comprise passing the ammonia-containing gas exiting the ammonia stripper through a condenser to condense at least some of the water within the ammonia-containing gas, for example passing the ammonia-containing water through a flow path within the condenser such that heat exchange between the ammonia-containing gas and the ammonia-containing water condenses water from the ammonia-containing gas and preheats the ammonia-containing water. The ammonia-containing water may be passed through the condenser before it passes through the first heat exchanger and after it passes through the further heat exchanger. A further cooling fluid may also be passed through the condenser.

By condensing water from the ammonia-containing gas, the amount of water that will pass through the thermal destructor is reduced. The thermal destructor uses energy, such as from landfill gas, to treat the ammonia-containing gas, and the higher the water content of the ammonia-containing gas the higher the amount of energy required to raise the ammonia-containing gas to the required temperature to destroy the ammonia therein. Furthermore, too high a water content can cause the burners to become smothered and stop functioning. Condensing the water not only reduces the energy requirement of the thermal destructor but also recovers more heat from the gasses into the incoming ammonia-containing water. This again reduces the burden on the boiler and therefore reduces the amount of energy needed from the hot exhaust gas.

The method may further comprise feeding condensate from the condenser into the upper end of the ammonia stripper. The condensate will contain a volume of dissolved ammonia and thus cannot be discharged. As the volume will be low compared to the volume of ammonia-containing water this condensate can be fed into the top of the stripper along with the ammonia-containing water for treatment. In this way a small amount of water will circulate within the system.

At the lower end of the ammonia stripper, between the forced air inlet and the steam inlet, the wastewater and the forced air may be passed in opposing directions through a heat exchange bed to preheat and saturate the air with water. For effective thermal scrubbing of ammonia from ammonia-containing water it is necessary to pass wet air over the ammonia-containing water at a temperature above the evaporation point of the ammonia but below the boiling point of the ammonia-containing water. This requires the air to be heated and water added to it. By passing the incoming air in counter flow over the outgoing wastewater, the incoming air becomes preheated and will pick up some moisture. This reduces the amount of steam required from the boiler thereby reducing the energy requirement from the exhaust gas as a lower steam production will be required.

The method may include controlling the mixture of steam and air entering the packed bed of the ammonia stripper so that its temperature is maintained in the range of 75°C to 90°C, for example so that the temperature is 80°C ±2°C. The method may further include controlling the flow of fluid through the heat exchangers so that the temperature of the ammonia-containing water entering the ammonia stripper is maintained in the range of 72°C to 85°C, for example 75°C ±3°C.

The method may further comprise passing the ammonia-containing gas through a thermal destructor to decompose the ammonia therein, such as a thermal destructor as described hereinabove. Thus, the thermal destructor may burn gas, such as landfill gas, in a burner to produce a hot gas exhaust stream. In this way, the waste heat from the thermal destruction of the ammonia is used to drive the system. Multiple-stage heat recovery at each stage to preheat the incoming ammonia-containing water and the incoming air can provide improved efficiency, and may be achieved without the need for a raised pH.

An example of a known system for removing ammonia from ammonia-containing water will now be described with reference to the following drawings in which:
Figure 1 shows a process flow diagram for a system and method for removing ammonia from ammonia-containing water as known in the art;
Figure 2 shows a schematic of an ammonia stripper used in the system shown in Figure 1;
Figure 3 shows a schematic: of a thermal destructor used in the system shown in Figure 1.

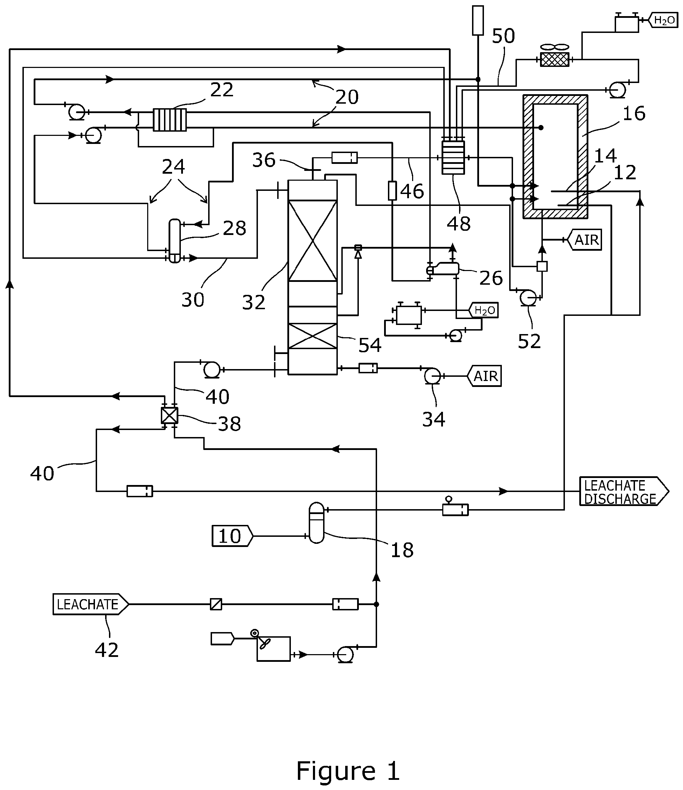

Referring to Figure 1, landfill gas 10, comprised substantially of methane is fed into burners 12, 14 located within a thermal destructor 16 via a buffer vessel 18. Hot exhaust gas from the thermal destructor is circulated via a conduit 20 through an economiser 22. High pressure water is circulated through a high pressure water conduit 24 and heat is exchanged between the hot exhaust gases and the water in the economiser 22 to raise the temperature and pressure of the water to approximately 140°C at 10 bar. The high pressure hot water passes through a boiler 26 in the form of a kettle wherein water is heated by heat exchange with the hot water to create steam. Downstream of the boiler 26 the hot water passes through a first heat exchanger 28. The heat exchanger 28 has a hot water flow path therethrough and an ammonia-containing water flow path therethrough so that passage of the two fluids causes heat transfer from the hot water to the ammonia-containing water to raise its temperature.

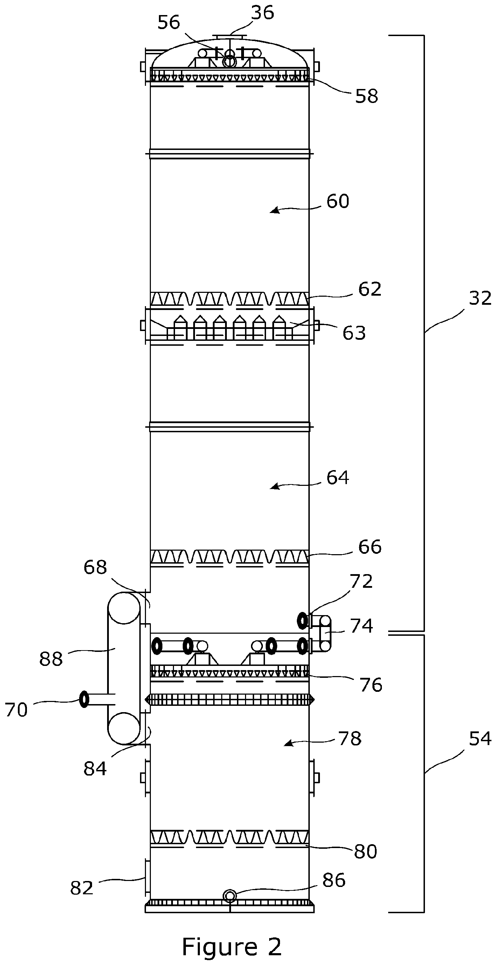

The ammonia-containing water exiting the first heat exchanger 28 passes through a conduit 30 into the top of an ammonia stripper 32 that is described in more detail with reference to Figure 2. Steam from the boiler 26 enters towards the bottom of the stripper 32. Also at the lower end of the stripper 32 is an inlet for a forced air flow created by blower 34. Within the stripper 32 an ammonia-containing water flows in a generally downwards direction under the influence of gravity and the mixture of steam and forced air flow in the opposite direction. The flow of the wet air over the ammonia-containing water thermally releases ammonia therefrom. The ammonia is carried out of the stripper 32 via an outlet 36 at its upper end. By the time the ammonia-containing water has passed through the stripper it is substantially free of ammonia and exits towards a lower end thereof as wastewater. The temperature of the wastewater is above ambient temperature and accordingly carries with it energy from the process. A further heat exchanger 38 is provided in the wastewater flow path 40 in which heat is exchanged between incoming ammonia-containing water 42 and outgoing wastewater so as to recover some of the energy from the wastewater and preheat the incoming ammonia-containing water.

An anti foaming agent 44 may be added to the incoming ammonia-containing water that prevents foaming of the ammonia-containing water in the system, in particular in the thermal stripper.

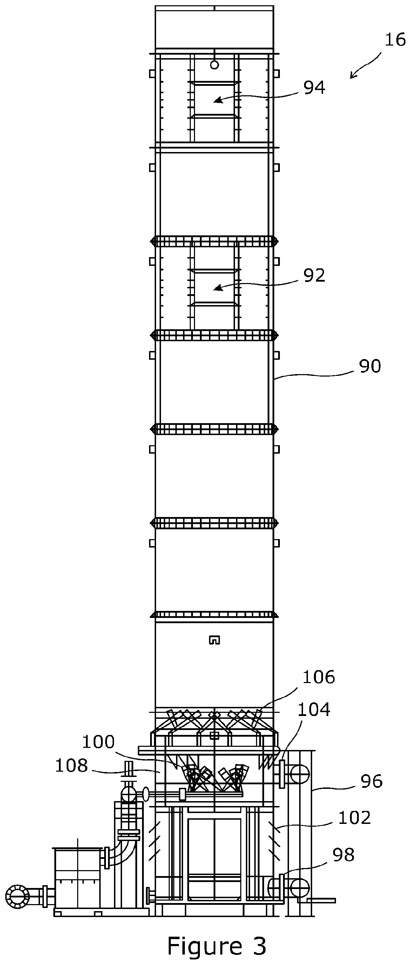

Ammonia-containing gas exits the stripper 32 via outlet 36 and passes therefrom into a thermal destructor 16 described in more detail in relation to Figure 3 below. The thermal destructor heats the ammonia-containing gas by passing it over burners that are combusting landfill gas so as to destroy the ammonia therein. As the ammonia-containing gas contains a large amount of water a significant amount of energy from the burners 12, 14 is consumed in heating the water.

A condenser 48 is provided in the ammonia-containing gas flow path 46 between the stripper 32 and the thermal destructor 16. The condenser 46 is cooled by passing a flow of incoming ammonia-containing water therethrough. As the incoming ammonia-containing water is below the condensation point of water, moisture within the ammonia-containing gas will condense in the condenser and heat will be transferred from the ammonia-containing gas to the incoming ammonia-containing water, thereby raising its temperature. The condenser 48 is placed in the ammonia-containing water flow path between the first heat exchanger 28 and the further heat exchanger 38. A further cooling circuit 50 may also pass through the condenser 48 to provide additional cooling if required. Condensate from the condenser is accumulated at a low point of the circuit and is pumped by a pump 52 to the top of the stripper 32 so that it may pass therethrough to release any ammonia that may have become dissolved therein as it condensed.

Located below the stripper is a cooling tower 54 that cools the wastewater exiting the stripper 32. The wastewater is fed into the top of the cooling tower 54 and the forced air is fed into the bottom of the cooling tower. The forced air and the wastewater pass in counter flow over one another so that heat is exchanged between the wastewater and the forced air thereby cooling the wastewater and preheating the forced air. The forced air exits the cooling tower and enters the stripper 32. The forced air may mix with the steam either before it enters the stripper 32 or within the stripper 32.

A controller (omitted for clarity) controls the flow of air and steam to obtain a temperature of approximately 80°C for the incoming saturated heated air. The controller also controls the amount of landfill gas being burned and the fluid flow through the heat exchangers, in particular through the first heat exchanger 28 to obtain an ammonia-containing water temperature of approximately 75°C at the point of entry of the ammonia-containing water into the stripper 32. In this way the temperature of the ammonia-containing water passing through the stripper 32 can be maintained at a temperature at which thermal release of ammonia from the ammonia-containing water is effective.

Referring now to Figure 2, a combined ammonia stripper 32 and cooling tower 54 is shown. The stripper 32 has an inlet 56 at its upper end at which ammonia-containing water is introduced into the stripper 32. The ammonia-containing water flows through a distributor 58 so that it is distributed evenly over the upper surface of a first packed bed 60 which is supported on a first packing support 62. The packed bed 60 may comprise any suitable packing material, for example pall rings.

Below the first packing support 62 is a liquid redistributor 63 that redistributes the ammonia-containing water evenly over the upper surface of a second packed bed 64 supported on a second packing support 66.

An inlet 68 for ambient air and steam is provided below the second packing support 66. The steam mixes with the air to saturate it and to raise its temperature. In use the steam and air pass upwardly through the packed beds 64, 60 as the ammonia-containing water passes in the opposite direction under the influence of gravity. The packed beds 64, 60 ensure a large surface area of ammonia-containing water is exposed to the saturated hot air. The ammonia is released from the ammonia-containing water in the stripper 32 and passes out of an ammonia-containing gas outlet 36 at the top of the stripper 32. At the bottom of the stripper 32 is an outlet 72 for the treated ammonia-containing water (wastewater).

Situated immediately below the stripper 32 is a cooling tower 54 in which the wastewater is cooled. A conduit 74 transfers the wastewater from the outlet 72 to a fluid distributor 76 from where it passes over a further packed bed 78 supported on a further packing support 80, under the influence of gravity.

Below the further packing support 80 is an ambient air inlet 82 through which forced air enters the cooling tower 54. The forced air and the wastewater pass in counter flow over the packed bed and the forced air exits the cooling tower at an outlet 84 at its upper end. Counter flow of the wastewater and the forced air cools the wastewater and raises the temperature of the air so that it is already preheated before it mixes with the steam.

A discharge outlet 86 is located at the bottom of the cooling tower 54 through which wastewater exits the combined cooling tower/stripper assembly.

A conduit 88 transfers the preheated air from the cooling tower 54 to the ammonia stripper 32. The conduit 88 has a steam inlet 70 through which steam is injected into the air flow passing therethrough to saturate it and further heat it.

Although shown as a combined unit, the stripper 32 and the cooling tower 54 may be provided as two separate components, which could be placed adjacent one another rather than on top of one another.

Referring now to Figure 3, a thermal destructor 16 for use in the system is shown. The thermal destructor 16 comprises a combustion area towards its lower end and a large chimney-like structure 90 extending vertically therefrom. The chimney-like structure 90 is capped at an upper end and has a vent (not shown) through which gasses can be vented, however it will be appreciated that the chimney-like structure 90 could also open to vent at its upper end.

The chimney-like structure 90 has an exhaust gas outlet 92 and a return exhaust gas inlet 94. Hot exhaust gas taken from the outlet 92 and returned to the inlet 94 passes through a heat exchanger to drive heat fluid in the high pressure hot water circuit.

Referring now to the combustion area, this is split into a primary combustion area and a secondary combustion area. An ammonia-containing gas manifold 96 feeds ammonia-containing gas to a primary inlet 98 located at the bottom of the combustion zone. A baffle plate may be provided above the inlet 98 and have a central outlet therethrough so that ammonia-containing gas is fed substantially up the centre of the primary combustion area. A plurality of primary combustion burners 100 are fed via a manifold with landfill gas. The landfill gas is burned in the burners 100 and the ammonia-containing gas passes thereover as it rises through the primary combustion area. A plurality of louvers 102 allow air to be drawn into the thermal destructor 16 to pass with the ammonia-containing gas through the primary burners 100.

The ammonia-containing gas manifold 96 also feeds ammonia-containing gas to a second inlet 104 from where it enters a circumferential plenum chamber 108 inside the thermal destructor 16. The plenum chamber 108 has at least one outlet around its upper edge through which the ammonia-containing gas can exit the plenum chamber 108 into the second combustion area. Situated circumferentially around the interior of the thermal destructor 16 at a position above the plenum chamber 108 outlet is a second plurality of burners 106. In use ammonia-containing gas passing out of the plenum chamber 108 is directed over the second plurality of burners 106 so that it becomes heated.

It is an object of the present invention to provide improved ammonia stripper apparatus and methods, in particular ammonia stripper apparatus and methods for the thermal stripping of ammonia from ammonia-containing water.

Thus, according to the present invention in a first aspect there is provided an ammonia stripper for stripping ammonia from ammonia-containing water, the ammonia stripper comprising an ammonia-containing water inlet, a steam inlet, and a forced air inlet; and
an ammonia-containing gas outlet and a wastewater outlet;
wherein, in use, the steam and air contact the ammonia-containing water in counter-flow to thereby release ammonia from the ammonia-containing water;
and wherein the ammonia stripper further comprises a steam and air mixing duct shaped to create turbulence in the steam and air flow to promote mixing of the steam and air flow prior to contacting the ammonia-containing water.

Thorough mixing of the steam and air prior to ammonia stripping in the stripper improves the efficiency of the stripping process.

The steam and air mixing duct is shaped to create turbulence in the steam and air flow to promote mixing of the steam and air flow. The mixing duct may thus be shaped so as to divert the steam-air mixture through an extended, turning flow path. The mixing duct may thus contain curves, for example have a spiral (e.g. circular or helicoidal) shape. The mixing duct may include other features to promote turbulence, such as corners or internal baffles.

The steam and air mixing duct is positioned within the ammonia stripper so as to mix the steam and air prior to contacting the ammonia-containing water. Thus, for example, the mixing duct may be positioned between the steam and air inlets and the location within the ammonia stripper where the steam and air contact the ammonia-containing water, for example the packed bed in the ammonia stripper described hereinabove.

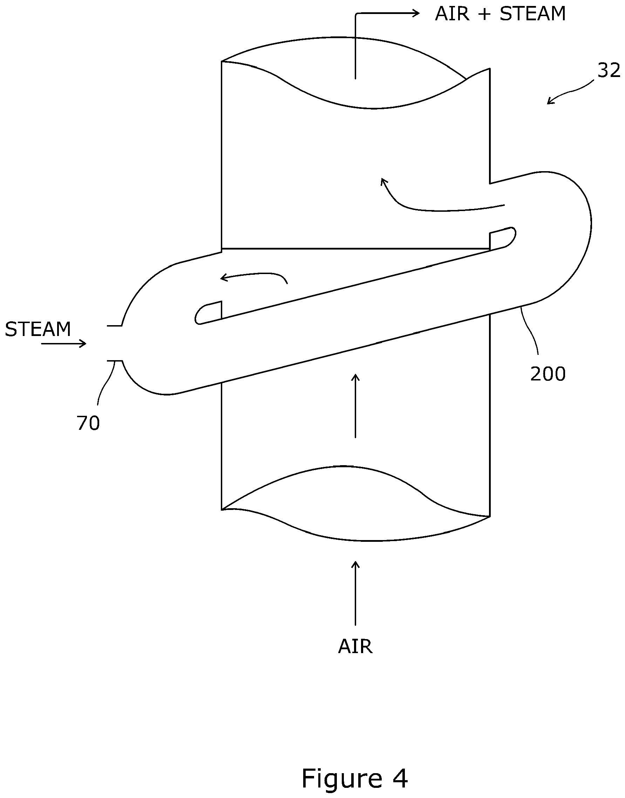

A schematic of an embodiment of a steam and air mixing duct for use in the ammonia stripper of the first aspect of the present invention is shown in Figure 4. Like reference numerals as used in Figures 1 to 3 are used in Figure 4 as appropriate.

Thus, referring to Figure 4, forced air passes into the ammonia stripper 32 (shown in Figure 2 and partially in Figure 4) from cooling tower outlet 84 (shown in Figure 2), via the mixing duct 200. Steam also enters the mixing duct 200 via steam inlet 70. The mixing duct 200 is shaped so as to divert the steam-air mixture through an extended, turning flow path. The mixing duct 200 shown schematically in Figure 4 has a spiral helicoidal shape, but other arrangements may be used. The steam and air mixture then passes through the inlet 68 (shown in Figure 2), for use in the ammonia stripper as described hereinabove.

According to a second aspect of the present invention there is provided a method for removing ammonia from ammonia-containing water which comprises the steps of:
providing an ammonia stripper comprising an ammonia-containing water inlet, a steam inlet, and a forced air inlet; and an ammonia-containing gas outlet and a wastewater outlet; and
contacting steam and air with the ammonia-containing water in counter-flow within the ammonia stripper to thereby release ammonia from the ammonia-containing water;
wherein the forced air is at least partially pre-humidified in a pre-humidifier prior to mixing with the steam.

Pre-humidifying the forced air per the method of the second aspect of the present invention reduces the steam requirement for raising the temperature of the air to operational levels for ammonia stripping.

In systems for removing ammonia from ammonia-containing water as described hereinabove, a cooling tower, such as that described with reference to Figure 2, may be used as the pre-humidifier. In such ammonia strippers, forced air entering the ammonia stripper through the forced air inlet towards or at the base of the cooling tower may be heated and saturated with water within the cooling tower prior to mixing with steam.

According to a third aspect of the present invention there is provided an ammonia stripper for stripping ammonia from ammonia-containing water, the ammonia stripper comprising an ammonia-containing water inlet, a steam inlet, and a forced air inlet; and
an ammonia-containing gas outlet and a wastewater outlet;
wherein, in use, the steam and air contact the ammonia-containing water in counter-flow to thereby release ammonia from the ammonia-containing water;
and wherein the ammonia stripper further comprises a precipitation unit upstream of the ammonia-containing water inlet, for precipitating solids from the ammonia-containing water prior to the inlet.

Whilst the ammonia-containing water may be filtered to remove solids prior to entering the ammonia stripper, solids can nevertheless build up within the stripper, in particular carbonates (for example, calcium and/or magnesium carbonate) and cause blockages, thus reducing the efficiency of the stripper. Removal of the material causing the blockage can be expensive and time-consuming. For example, in embodiments such as those described with reference to Figure 2, it can require removal, cleaning, and replacement of the packing from the stripper. The use of a precipitation unit for precipitating solids from the ammonia-containing water prior to the inlet can reduce or eliminate such blockages.

The ammonia-containing water is pre-treated within the precipitation unit to precipitate solids from the water prior to the ammonia stripper inlet. Precipitation of solids within the precipitation unit is encouraged by adjusting the conditions within the unit to maximise precipitate formation. For example, within the precipitation unit hot incoming wastewater containing carbonates can interact with ammonia-containing gas exiting the ammonia stripper, which contains high concentrations of ammonia and carbon dioxide. The interaction of these two streams leads to the precipitation of carbonates in the precipitation unit, this avoiding their precipitation in the ammonia stripping column. The precipitation unit may additionally or alternatively include an acid for reaction with the ammonia-containing water. For example, sulphuric acid may be used to preferentially react with and precipitate out carbonates, such as calcium and/or magnesium carbonate, within the ammonia-containing water. Sulphuric acid may be available on many sites as the effluent from a hydrogen sulphide bioscrubber.

The precipitation unit is preferably located at ground level so as to be readily accessible.

According to the third aspect of the present invention there is also provided a method for removing ammonia from ammonia-containing water which comprises the steps of:
providing an ammonia stripper comprising an ammonia-containing water inlet, a steam inlet, and a forced air inlet; and an ammonia-containing gas outlet and a wastewater outlet; and
contacting steam and air with the ammonia-containing water in counter-flow within the ammonia stripper to thereby release ammonia from the ammonia-containing water;
wherein the ammonia-containing water is pre-treated in a precipitation unit prior to entering the inlet, to precipitate solids from the ammonia-containing water.

According to a fourth aspect of the present invention there is provided a thermal destructor for destroying ammonia in ammonia-containing gas from an ammonia stripper, wherein the thermal destructor comprises an exhaust gas recycler for recycling exhaust gasses from the thermal destructor back into the thermal destructor for further combustion.

Recycling of the exhaust gasses back into the thermal destructor for further combustion permits the control of both ammonia gas release and the formation of nitrogen oxides (NOx), both to very low concentrations.

The thermal destructor may comprise features as described hereinabove, for example as described with reference to Figure 3. Thus, the thermal destructor of the fourth aspect of the present invention may further comprise one or more of the following features:
a tower for retaining heated gasses for a dwell time;
a circumferential plenum chamber extending around the tower towards the lower end thereof and having a first ammonia-containing gas inlet and at least one plenum outlet;
a first plurality of landfill gas burners disposed around the circumference of the tower above the at least one plenum outlet;
a second plurality of landfill gas burners, substantially centrally located in the tower and disposed vertically below the at least one plenum outlet;
a second ammonia-containing gas inlet located at the bottom of the thermal destructor; and
a plurality of air inlet louvers disposed in the exterior surface of the tower vertically between the second ammonia-containing gas inlet and the second plurality of landfill gas burners.

According to the fourth aspect of the present invention there is also provided a method for destroying ammonia in ammonia-containing gas, which method comprises passing the ammonia-containing gas through a thermal destructor to decompose the ammonia therein, and recycling the exhaust gasses from the thermal destructor back into the thermal destructor for further combustion.

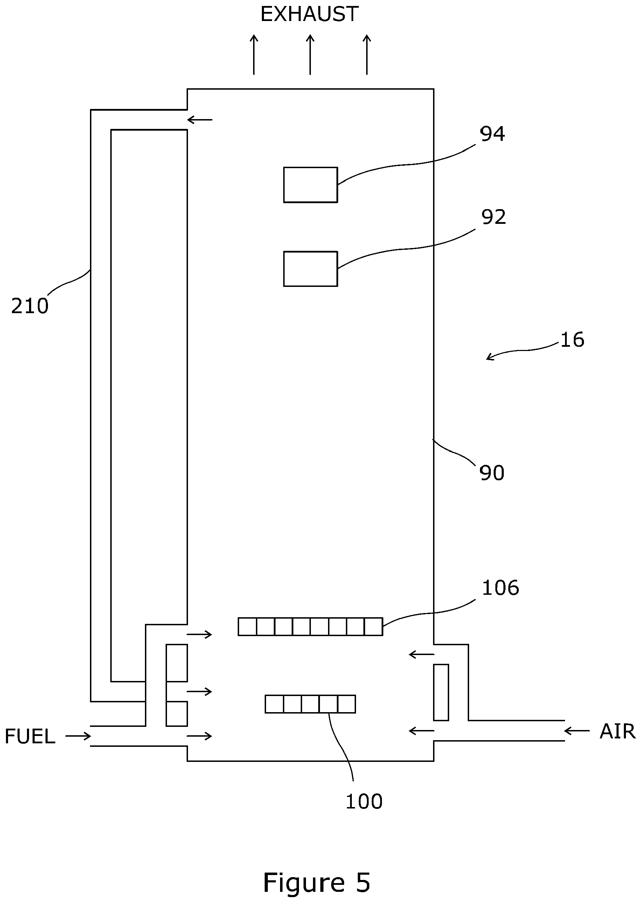

A schematic of an embodiment of a thermal destructor according to the fourth aspect of the present invention is shown in Figure 5. Like reference numerals as used in the previous Figures are used in Figure 5 as appropriate.

Thus, turning to Figure 5, as described in more detail above with reference to Figure 3, a thermal destructor 16 comprises a chimney like structure 90, primary 100 and secondary 106 burners fed by fuel and air as indicated, an exhaust gas outlet 92 and a return exhaust gas inlet 94. The thermal destructor 16 also comprises an exhaust gas recycler 210 for recycling exhaust gasses back into the thermal destructor for further combustion. Other features and functions of the thermal destructor 16 are as described hereinabove with reference to Figure 3.

According to a fifth aspect of the present invention there is provided a thermal destructor for destroying ammonia in ammonia-containing gas from an ammonia stripper, wherein the thermal destructor comprises a sealed upper end and exhaust gasses are vented via an economiser for heat transfer from the exhaust gases to liquid entering the ammonia stripper.

In contrast to the thermal destructor described hereinabove with reference to Figure 3, from which exhaust gasses are either vented via a vent at the upper end or is open at the upper end, the thermal destructor of the fifth aspect of the present invention is sealed at the upper end, for example by a lid, to increase energy recovery and control of energy within the thermal destructor. In the thermal destructor of the fifth aspect of the present invention, the exhaust gasses are vented via an economiser, for example as described hereinabove with reference to Figure 1, for heat transfer to liquid entering the ammonia stripper, for example high pressure hot water for use in ammonia stripping. The economiser may form part of the thermal destructor itself, or may form part of an ammonia stripper to which the thermal destructor is operationally connected or which it forms a part.

The thermal destructor of the fifth aspect of the present invention may comprise one or more of the features described above with reference to the fourth aspect of the present invention.

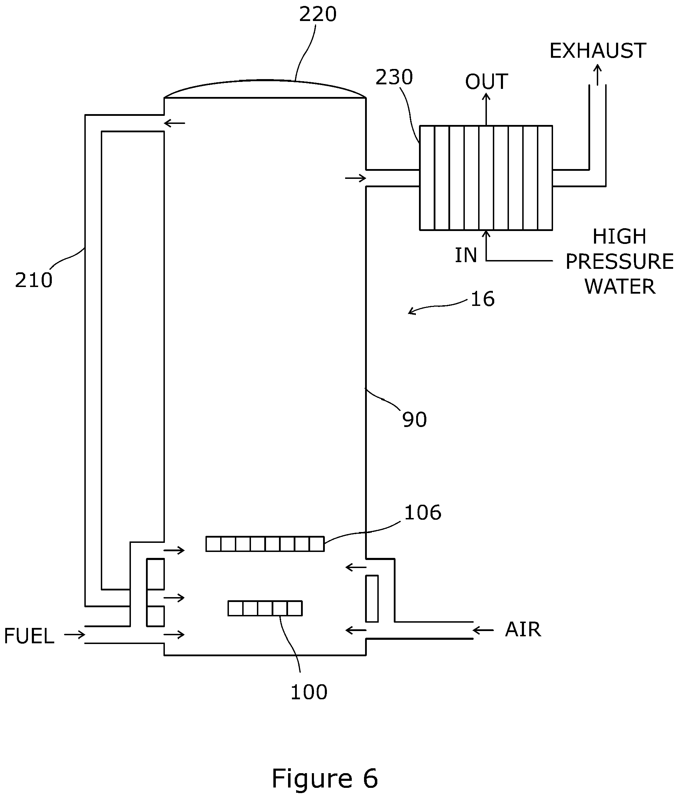

A schematic of an embodiment of a thermal destructor according to the fifth aspect of the present invention is shown in Figure 6. Like reference numerals as used in the previous Figures are used in Figure 6 as appropriate.

Thus, turning to Figure 6, as described in more detail above with reference to Figures 3 and 5, a thermal destructor 16 comprises a chimney like structure 90, primary 100 and secondary 106 burners fed by fuel and air as indicated, and an exhaust gas recycler 210 for recycling exhaust gasses back into the thermal destructor for further combustion. In the embodiment shown in Figure 6, the thermal destructor 16 also comprises a sealed upper end 220 and exhaust gasses are vented via an economiser 230 for heat transfer from the exhaust gases to liquid entering the ammonia stripper, for example high pressure hot water for use in ammonia stripping, as indicated. Other features and functions of the thermal destructor 16 are as described hereinabove with reference to Figures 3 and 5.

According to a sixth aspect of the present invention there is provided an ammonia stripper for stripping ammonia from ammonia-containing water, the ammonia stripper comprising an ammonia-containing water inlet, a steam inlet, and a forced air inlet; and
an ammonia-containing gas outlet and a wastewater outlet;
wherein, in use, the steam and air contact the ammonia-containing water in counter-flow to thereby release ammonia from the ammonia-containing water;
and wherein the ammonia stripper further comprises a steam flash vessel downstream of the wastewater outlet, for generating steam from the wastewater produced by the ammonia stripper for recycling into the ammonia stripper.

The steam flash vessel used in the ammonia stripper of the sixth aspect of the present invention thus provides steam for the ammonia stripping process, i.e. at least some of the water required for the stripping process is produced by the process itself.

The steam flash vessel may comprise a heater for heating the wastewater under pressure prior to it generating steam for recycling into the ammonia stripping process. The amount of wastewater which is converted to steam by the steam flash vessel may be, for example, from 1 to 20 wt%, for example approximately 10 wt%.

According to the sixth aspect of the present invention there is also provided a method for removing ammonia from ammonia-containing water which comprises the steps of:
providing an ammonia stripper comprising an ammonia-containing water inlet, a steam inlet, and a forced air inlet; and an ammonia-containing gas outlet and a wastewater outlet; and
contacting steam and air with the ammonia-containing water in counter-flow within the ammonia stripper to thereby release ammonia from the ammonia-containing water;
wherein the wastewater passes from the wastewater outlet to a steam flash vessel downstream of the wastewater outlet, where it is at least partially converted to steam and recycled into the ammonia stripper.

According to a seventh aspect of the present invention there is provided a method for removing ammonia from ammonia-containing water which comprises the steps of:
providing an ammonia stripper comprising an ammonia-containing water inlet, a steam inlet, and a forced air inlet; and an ammonia-containing gas outlet and a wastewater outlet; and
contacting steam and air with the ammonia-containing water in counter-flow within the ammonia stripper to thereby release ammonia from the ammonia-containing water;
wherein ammonia-containing gas is drawn from the ammonia-containing gas outlet and returned into the ammonia stripper to mix with the forced air entering the ammonia stripper.

It has been unexpectedly found that by "seeding" the incoming forced air with ammonia-containing gas exiting the ammonia stripper, the performance of the ammonia stripper is enhanced. The combination of carbon dioxide gas and ammonia in air from the ammonia stripper results in adjustments within the column, for example alkalinity, which are favourable to improved removal of ammonia from the wastewater.

It is to be noted that each of the different aspects of the present invention may be used in combination with one or more of the other aspects of the invention. Thus, for example, the ammonia stripper of the first aspect may be used with one or more of the method of the second aspect, the ammonia stripper and method of the third aspect, the thermal destructor and method of the fourth aspect, the thermal destructor of the fifth aspect, the ammonia stripper and method of the sixth aspect, and the method of the seventh aspect, and so forth for the other aspects of the invention. It is also to be noted that each of the aspects of the present invention may be used in combination with any of the features of the system, ammonia stripper, cooling tower and thermal destructor as known the art and described herein.

Other inventive aspects and features are disclosed in the following numbered clauses.
Clause 1. An ammonia stripper for stripping ammonia from ammonia-containing water, the ammonia stripper comprising an ammonia-containing water inlet, a steam inlet, and a forced air inlet; and an ammonia-containing gas outlet and a wastewater outlet; wherein, in use, the steam and air contact the ammonia-containing water in counter-flow to thereby release ammonia from the ammonia-containing water; and wherein the ammonia stripper further comprises a steam and air mixing duct shaped to create turbulence in the steam and air flow to promote mixing of the steam and air flow prior to contacting the ammonia-containing water.
Clause 2: An ammonia stripper according to clause 1 wherein the mixing duct is shaped so as to divert the steam-air mixture through an extended turning flow path.
Clause 3: An ammonia stripper according to clause 1 or 2 wherein the mixing duct has a spiral shape, and/or includes corners or internal baffles.
Clause 4: An ammonia stripper according to clause 1, 2 or 3 wherein the mixing duct is positioned between the steam and air inlets and the location within the ammonia stripper where the steam and air contact the ammonia-containing water.
Clause 5: An ammonia stripper for stripping ammonia from ammonia-containing water, the ammonia stripper comprising an ammonia-containing water inlet, a steam inlet, and a forced air inlet; and an ammonia-containing gas outlet and a wastewater outlet; wherein, in use, the steam and air contact the ammonia-containing water in counter-flow to thereby release ammonia from the ammonia-containing water; and wherein the ammonia stripper further comprises a precipitation unit upstream of the ammonia-containing water inlet, for precipitating solids from the ammonia-containing water prior to the inlet.
Clause 6: A method for removing ammonia from ammonia-containing water which comprises the steps of: providing an ammonia stripper comprising an ammonia-containing water inlet, a steam inlet, and a forced air inlet; and an ammonia-containing gas outlet and a wastewater outlet; and contacting steam and air with the ammonia-containing water in counter-flow within the ammonia stripper to thereby release ammonia from the ammonia-containing water; wherein the forced air is at least partially pre-humidified in a pre-humidifier prior to mixing with the steam.
Clause 7: A method according to clause 6 wherein a cooling tower is used as the pre-humidifier, wherein air enters the ammonia stripper through an air inlet towards or at the base of the cooling tower and is heated and saturated with water within the cooling tower prior to mixing with steam.
Clause 8: An ammonia stripper according to clause 7 wherein the precipitation unit is adapted for precipitating carbonates.
Clause 9: An ammonia stripper according to clause 8 wherein the carbonates comprise calcium and/or magnesium carbonate.
Clause 10: An ammonia stripper according to clause 8 or 9 wherein conditions within the precipitation unit include hot incoming wastewater containing carbonates interacting with ammonia-containing gas exiting the ammonia stripper.
Clause 11: An ammonia stripper according to clause 8, 9 or 10 wherein the precipitation unit includes an acid for reaction with the ammonia-containing water.
Clause 12: An ammonia stripper according to clause 11 wherein the acid comprises sulphuric acid.
Clause 13: An ammonia stripper according to any one of clauses 8 to 12 wherein the precipitation unit is located at ground level.
Clause 14: A method for removing ammonia from ammonia-containing water which comprises the steps of: providing an ammonia stripper comprising an ammonia-containing water inlet, a steam inlet, and a forced air inlet; and an ammonia-containing gas outlet and a wastewater outlet; and contacting steam and air with the ammonia-containing water in counter-flow within the ammonia stripper to thereby release ammonia from the ammonia-containing water; wherein the ammonia-containing water is pre-treated in a precipitation unit prior to entering the inlet, to precipitate solids from the ammonia-containing water.
Clause 15: A thermal destructor for destroying ammonia in ammonia-containing gas from an ammonia stripper, wherein the thermal destructor comprises an exhaust gas recycler for recycling exhaust gasses from the thermal destructor back into the thermal destructor for further combustion.
Clause 16: A method for destroying ammonia in ammonia-containing gas, which method comprises passing the ammonia-containing gas through a thermal destructor to decompose the ammonia therein, and recycling exhaust gasses from the thermal destructor back into the thermal destructor for further combustion.
Clause 17: A thermal destructor for destroying ammonia in ammonia-containing gas from an ammonia stripper, wherein the thermal destructor comprises a sealed upper end and exhaust gasses are vented via an economiser for heat transfer from the exhaust gases to liquid entering the ammonia stripper.
Clause 18: A thermal destructor according to clause 17 wherein the economiser is adapted for heat transfer to high pressure hot water for use in ammonia stripping.
Clause 19: An ammonia stripper for stripping ammonia from ammonia-containing water, the ammonia stripper comprising an ammonia-containing water inlet, a steam inlet, and a forced air inlet; and an ammonia-containing gas outlet and a wastewater outlet; wherein, in use, the steam and air contact the ammonia-containing water in counter-flow to thereby release ammonia from the ammonia-containing water; and wherein the ammonia stripper further comprises a steam flash vessel downstream of the wastewater outlet, for generating steam from the wastewater produced by the ammonia stripper for recycling into the ammonia stripper.
Clause 20: An ammonia stripper according to clause 19 wherein the steam flash vessel provides steam for the ammonia stripping process.
Clause 21: An ammonia stripper according to clause 19 or 20 wherein the steam flash vessel comprises a heater for heating the wastewater under pressure prior to it generating steam for recycling into the ammonia stripping process.
Clause 22: An ammonia stripper according to clause 19, 20 or 21 wherein from 1 to 20 wt%, for example approximately 10 wt% of the wastewater is converted to steam by the steam flash vessel.
Clause 23: A method for removing ammonia from ammonia-containing water which comprises the steps of: providing an ammonia stripper comprising an ammonia-containing water inlet, a steam inlet, and a forced air inlet; and an ammonia-containing gas outlet and a wastewater outlet; and contacting steam and air with the ammonia-containing water in counter-flow within the ammonia stripper to thereby release ammonia from the ammonia-containing water; wherein the wastewater passes from the wastewater outlet to a steam flash vessel downstream of the wastewater outlet, where it is at least partially converted to steam and recycled into the ammonia stripper.
Clause 24: A method for removing ammonia from ammonia-containing water which comprises the steps of: providing an ammonia stripper comprising an ammonia-containing water inlet, a steam inlet, and a forced air inlet; and an ammonia-containing gas outlet and a wastewater outlet; and contacting steam and air with the ammonia-containing water in counter-flow within the ammonia stripper to thereby release ammonia from the ammonia-containing water; wherein ammonia-containing gas is drawn from the ammonia-containing gas outlet and returned into the ammonia stripper to mix with the forced air entering the ammonia stripper.

## Claims

1. A method for removing ammonia from ammonia-containing water which comprises the steps of:
providing an ammonia stripper comprising an ammonia-containing water inlet, a steam inlet, and a forced air inlet; and an ammonia-containing gas outlet and a wastewater outlet; and
contacting steam and air with the ammonia-containing water in counter-flow within the ammonia stripper to thereby release ammonia from the ammonia-containing water;
wherein the forced air is at least partially pre-humidified in a pre-humidifier prior to mixing with the steam.

2. A method according to claim 1 wherein a cooling tower is used as the pre-humidifier, wherein air enters the ammonia stripper through an air inlet towards or at the base of the cooling tower and is heated and saturated with water within the cooling tower prior to mixing with steam.
